# EUROPÄISCHE PATENTANMELDUNG

(11) **EP 4 001 187 A1**
(43) Veröffentlichungstag der Anmeldung: **25.05.2022**
(21) Anmeldenummer: 21206389.5
(22) Anmeldetag: 04.11.2021
(51) Int. Cl.: B65G 47/26, B26D 7/32, B65G 57/32

(54) **VERFAHREN ZUM QUER-POSITIONIEREN EINES ZU TRANSPORTIERENDEN ARTIKELS**

(30) Priorität: 11.11.2020 DE 102020129750
(71) Anmelder: MULTIVAC Sepp Haggenmüller SE & Co. KG, 87787 Wolfertschwenden (DE)
(72) Erfinder: Weiss, Hans-Christian, 35684 Dillenburg (DE); Stachel, Tom, 87439 Kempten (DE)
(74) Vertreter: Weickmann & Weickmann PartmbB

(57) **Zusammenfassung**

Um Artikel (A) - sei es einzelne Scheiben (S) oder in Längsrichtung (10) geschindelte Teil-Portionen (P1, P2) aus Scheiben (S) - in Querrichtung (11) zur Laufrichtung (10a, b) von Förder-Einheiten (27a, b), auf denen diese Artikel (A) transportiert werden, Quer-Schindeln zu können werden nicht die beiden Förder-Einheiten (27a, b), auf denen sind je einer der beiden Artikel (A) vollflächig aufliegt, zur Überlappung gebracht zur Erzielung der Quer-Schindelung, sondern einer der Artikel (A) wird auf seiner Förder-Einheit (27a, b) mit einem seitlichen Überstand (Ü1) zur anderen Förder-Einheit (27b, a), und dem dort randseitig aufgelegten anderen Artikel (A) herantransportiert mit einer solchen Höhendifferenz, dass die beiden Artikel (A) schließlich überlappen und aufeinander abgelegt werden können, die beiden Förder-Einheiten (27a, b), jedoch lediglich hierfür eng nebeneinander geführt werden müssen ohne selbst zu überlappen. Dies vereinfacht die Bauform der Überlappungs-Einheit (30) und verringert deren Bauhöhe.

## Beschreibung

### I. Anwendungsgebiet

Die Erfindung betrifft Aufschneide-Maschinen, insbesondere sogenannte Slicer, mit denen in der Lebensmittelindustrie Stränge eines nur geringfügig kompressiblen Produktes wie Wurst oder Käse in Scheiben aufgeschnitten werden.

### II. Technischer Hintergrund

Da diese Stränge mit einem über ihre Länge gut formhaltigen und maßhaltigen, also im Wesentlichen konstanten, Querschnitt hergestellt werden können, werden sie Produkt-Kaliber genannt.

Dabei werden meist mehrere Produkt-Kaliber nebeneinander gleichzeitig aufgeschnitten, indem vom gleichen Messer, welches sich in Querrichtung zur Längsrichtung der Produkt-Kaliber bewegt, in einem Durchgang jeweils eine Scheibe abgeschnitten wird.

Die Produkt-Kaliber werden von einem Zuförderer vorwärts geschoben in Richtung Messer, meist auf einem schräg nach unten gerichteten Zuförderer, und jeweils durch die Produkt-Öffnungen einer so genannten Schneidbrille geführt, an deren vorderen Ende das darüber hinaus vorstehende Teil des Produkt-Kalibers von dem Messer unmittelbar vor der Schneidbrille als Scheibe abgetrennt wird.

Die Scheiben fallen in aller Regel auf eine Abförder-Einheit, mittels der sie zur Weiterverarbeitung abtransportiert werden.

Abhängig von der - intermittierenden - Ansteuerung des ersten Förderbandes dieser Abförder-Einheit, auf das die Scheiben fallen, dem sogenannten Portionierband, werden von diesem Portionierband entweder Einzelscheiben abtransportiert, oder das Portionierband wird so intermittierend angesteuert, dass von einem Kaliber abgeschnittene Scheiben dort nacheinander als in Längsrichtung geschindelte Portion, also mit sich in Längsrichtung teilweise überlappenden Scheiben, abgelegt wird.

Darüber hinaus sind Packungen von aufgeschnittener Wurst oder Käse bekannt, bei denen solche in Längsrichtung geschindelte Streifen als Teil-Portionen zusätzlich in Querrichtung überlappen und zu einer gesamten Portion quer-geschindelt sind.

Dies wird bisher meist von Hand durchgeführt oder mittels Maschinen - die dann meist nicht mehr Bestandteil der Aufschneide-Maschine sind, sondern eine separate, stromabwärts aufgestellte Maschine, die hier Überlappungs-Einheit genannt wird - bei denen die einzelnen Bänder, die die in Längsrichtung geschindelten Teil-Portionen heranführen, teilweise übereinander geführt werden und ihre Teil-Portionen auf ein darunterliegendes weiterführendes Band abwerfen und bei diesem Abwurf die in Längsrichtung geschindelten Teil-Portionen zusätzlich in Querrichtung überlappend quer geschindelt werden, wie dies beispielsweise aus der DE 102015104055 A1, siehe dort insbesondere Figur 9, bekannt ist.

Wegen der großen Wurfweite stellt dies immer ein erhebliches Risiko dar, und die Bau Überlappungs-Einheit baut hoch und die Steuerung sowie der Aufbau sind kompliziert.

### III. Darstellung der Erfindung

### a) Technische Aufgabe

Es ist daher die Aufgabe gemäß der Erfindung, eine solche Überlappungs-Einheit sowie eine damit ausgestattete Aufschneide-Maschine, insbesondere einen Slicer, bereitzustellen, die einfacher aufgebaut sind als bisherigen Lösungen, sowie ein Verfahren zum Betrieb einer solchen Überlappung-Einheit.

### b) Lösung der Aufgabe

Diese Aufgabe wird durch die Merkmale der Ansprüche 1, 11 und 15 gelöst. Vorteilhafte Ausführungsformen ergeben sich aus den Unteransprüchen.

Hinsichtlich des Verfahrens zum Querschindeln von Einzelscheiben oder auch längsgeschindelten Teil-Portionen - vorliegend allgemein Artikel genannt -werden die beiden quer zur Förderrichtung nebeneinander befindlichen Förder-Einheiten mit dem Artikel darauf erfindungsgemäß zumindest am Ende ihrer Transportstrecke in Querrichtung in der Aufsicht betrachtet so eng nebeneinander angeordnet, dass der seitlich über seine Förder-Einheit überstehende Artikel den anderen Artikel auf der anderen Förder-Einheit in Querrichtung überragt, also demgegenüber eine Überlappung aufweist. Hierfür ist eine Höhendifferenz der Auflageflächen der beiden Förderer-Einheiten lediglich mindestens um die Höhe des tieferliegenden Artikels notwendig.

Indem im Gegensatz zum Stand der Technik nicht die gesamten Förder-Einheiten überlappen, weist der Aufbau eine geringere Bauhöhe auf und ist auch einfacher zu realisieren.

Anschließend wird die Höhendifferenz zwischen den beiden Auflageflächen wieder reduziert, sodass die beiden Artikel im Überlappungsbereich in Kontakt zueinander geraten und dort aufeinander liegen.

Sobald die Überlappung in Querrichtung hergestellt ist, also nach oder auch schon vor der Kontaktierung der beiden Artikel zueinander, können die beiden Förder-Einheiten ihre Artikel in Transportrichtung an eine nachfolgende Transport-Einheit, etwa ein - vorzugsweise breiteres - Förderband abgeben, vorzugsweise gleichzeitig, auf dem dann die beiden längsgeschindelten Teil-Portionen im quergeschindelten Zustand als gesamte Portion liegen und abtransportiert werden.

Um eine Relativ-Bewegung zwischen den beiden Artikeln zu vermeiden, werden die beiden Förder-Einheiten mit den Artikeln, also den Teil-Portionen, darauf spätestens ab dem Zeitpunkt des Kontaktes der beiden Artikel synchron angetrieben.

Die Überlappung kann auf unterschiedliche Art und Weise erzielt werden:
Eine erste Möglichkeit besteht darin, dass in der Aufsicht betrachtet die beiden Förder-Einheiten nicht parallel zueinander verlaufen, sondern zumindest in einem Teilbereich, vorzugsweise aber über ihre gesamte Länge, mit einem spitzen Zwischenwinkel von insbesondere maximal 30°, besser maximal 20°, besser maximal 15° zueinander liegen, vor allem wenn es sich dabei um Gurt-Förderbänder handelt, deren Laufrichtungen sich in Transportrichtung einander annähern. Dadurch kann mit geringem baulichem Aufwand die Überlappung erzeugt werden.

Eine zweite Möglichkeit besteht darin, eine solche Förder-Einheit samt des darauf liegenden Artikels in Querrichtung zu verfahren in Richtung der anderen Förder-Einheit, bis die gewünschte Überlappung erzielt ist.

Dadurch kann das Maß der Überlappung stufenlos geändert und eingestellt werden, jedoch ist der bauliche Aufwand für beispielsweise ein Förderband, welches zusätzlich in Querrichtung gesteuert verfahrbar ist, höher als bei einem nicht in Querrichtung verfahrbaren Förderband.

Falls eine Übergabe an eine nachfolgende Transport-Einheit nach dem Erzielen des gewünschten Maßes an Überlappung vermieden werden soll, können die beiden Förder-Einheiten, auf denen die beiden Artikel herangeführt wurden, auch ab der Überlappung und gegenseitigen Kontaktierung nicht nur synchron, sondern auch parallel zueinander weitergeführt werden, wofür eine Änderung der Laufrichtung bei mindestens einer der beiden Transport-Einheiten notwendig ist.

Die Vermeidung der Übergabe auf eine nachgeordnete Transport-Einheit spart deren zusätzlichen Antrieb und deren Ansteuerung ein.

Ab der vertikalen Kontaktierung der Artikel liegt dann der eine Artikel ganz auf der einen Förder-Einheit und der andere, obere Artikel großenteils auf der anderen, nun parallellaufenden, Förder-Einheit, mit seinem Überlappungsbereich aber - indirekt, mit dem unteren Artikel dazwischen - auf der erstgenannten Förder-Einheit auf.

Mit Gurt-Förderern als Förderbänder ist eine solche Änderung der Laufrichtung, insbesondere, wenn sich davor und danach Bereiche mit gerader Laufrichtung anschließen sollen, schwer zu realisieren.

Mit Glieder-Förderbändern oder Riemen-Förderbändern, etwa Rundriemen-Förderbändern, ist eine solche Umlenkung relativ einfach möglich, z.B. mittels einer Unterstützungswalze mit Umfangsnuten im Bereich der Richtungsänderung, in der die Riemen in den Umfangsnuten so tief aufgenommen sind, dass sie trotz der Richtungsänderung nicht herausspringen können. Stattdessen können auch einzelne Umlenkrollen für jeden Riemen eingesetzt werden, deren Rollenachse schräg zur Auflagefläche dieses Riemen-Förderbandes steht, was die Reibung und den Verschleiß gegenüber den einzelnen Riemen zusätzlich reduziert.

Noch einfacher ist die Erzielung der Überlappung, wenn als Förder-Einheiten einzelne Förder-Schlitten benutzt werden, auf denen jeweils ein Artikel aufliegt und transportiert wird, da dann die Fahrtrichtung dieser Förder-Schlitten - egal ob sie formschlüssig in einer Führungs-Spur geführt werden oder frei auf dem Untergrund verfahrend gesteuert werden - sehr einfach von einer schräg aufeinander zuführenden Fahrtrichtung in parallel zueinander liegende Fahrtrichtungen geändert werden kann. Allerdings ist der bauliche Aufwand solcher, insbesondere unabhängig voneinander ansteuerbarer und verfahrbarer, Förder-Schlitten höher.

Der benötigte seitliche Überstand des einen Artikels über den Rand seiner Auflagefläche hinaus wird in aller Regel dadurch erzielt, dass dieser Artikel in einer entsprechenden Querposition auf der Förder-Einheit abgelegt wird.

Je nach Anwendung kann es jedoch sinnvoll sein, dass der Artikel zunächst ohne seitlichen Überstand vollständig auf der Auflagefläche einer Förder-Einheit liegt und erst danach seinen seitlichen Überstand erhält.

Um hierfür keine Übergabe von einem auf einen nachfolgenden Förderer zu benötigen, kann stromabwärts der Aufgabestelle des Artikels die Auflagefläche dieser Förder-Einheit von der Seite her, an der der Überstand gewünscht wird, schmaler werden, also sich die Außenkante der Auflagefläche zur Transportrichtung hin annähern.

Dies ist beispielsweise bei Riemen-Förderbändern, die zunächst im spitzen Winkel zueinander verlaufen möglich, indem etwa bei einem Riemen-Förderband der äußerste Riemen entlang der Transportstrecke dieses Riemen-Förderbandes vor den anderen Riemen endet, also ins Rücktrum umgelenkt wird, wobei dies vom äußersten Riemen nach innen auch mit mehreren Riemen durchgeführt werden kann. Eine andere Möglichkeit besteht darin, dass sich dieser äußerste oder die mehreren äußeren Riemen eines Riemen-Förderbandes in Transportrichtung den übrigen Riemen in Querrichtung zunehmend annähern, was allerdings einen Schlupf gegenüber dem darauf aufliegenden Artikel in diesem Randbereich bewirkt.

Die Erzielung der notwendigen Höhendifferenz zwischen den beiderseitigen Auflageflächen der beiden Förder-Einheiten kann dadurch erfolgen, dass die beiden

Auflageflächen bereits am stromaufwärtigen Ende mindestens diese Höhendifferenz aufwiesen, was jedoch das Beladen mit den Artikeln erschweren kann.

Die bevorzugte Lösung besteht deshalb darin, dass die beiden Förder-Einheiten im stromaufwärtigen Endbereich mit ihren Auflageflächen auf gleicher Höhe positioniert werden, und in Querrichtung zueinander beabstandet sind, und erst entlang ihrer Transportstrecke auf die notwendige Höhendifferenz zueinander gebracht werden, insbesondere im mittleren Bereich der Transportstrecke.

Im stromabwärtigen Endbereich kann die Höhendifferenz wieder reduziert werden bis auf ein Maß, indem die beiden Artikel im Überlappungsbereich aufeinanderliegen.

Eine weitere Möglichkeit kombiniert die Erzielung der Überlappung mit der Erzielung der notwendigen Höhendifferenz der beiden Auflageflächen:
Wenn die beiden Förder-Einheiten, beispielsweise Gurt-Förderer, am stromaufwärtigen Ende mit ihren Auflageflächen auf gleicher Höhe angeordnet sind, können die beiden Förder-Einheiten, insbesondere Förderbänder, insbesondere Gurt-Förderbänder, auch von Anfang an parallel zueinander verlaufen, was insbesondere dann möglich ist, wenn die beiden in Querrichtung zu überlappenden Artikel zeitversetzt zueinander auf den beiden nebeneinander laufenden und synchron antreibbaren Förder-Einheiten aufgebracht werden, also zunächst in Längsrichtung zueinander versetzt darauf abgelegt werden.

Dann liegt der eine Artikel über seine gesamte Breite auf der einen Förder-Einheit auf, der andere Artikel dazu in Querrichtung überlappend dahinter zum Teil auf der einen und zum Teil auf der anderen Förder-Einheit, wodurch bereits die seitliche Überlappung erzielt ist.

Wenn nun die eine Förder-Einheit mit ihrer Auflagefläche nach oben läuft, auf der der Artikel nur teilweise aufliegt, so hebt dieser Artikel von der anderen Förder-Einheit, auf der sich der andere Artikel vollständig befindet, ab. Bis zu diesem Zeitpunkt sollten die beiden Förder-Einheiten natürlich gleich schnell in Transportrichtung laufen.

Wenn anschließend die beiden Förder-Einheiten mit einer Differenz-Geschwindigkeit so lange angetrieben werden - wobei eines von beiden auch stillstehen kann - bis die beiden Artikel die gleiche Längsposition erreicht haben, also einander überlappend auf unterschiedlichen Höhen angeordnet sind, so können ab diesem Zeitpunkt die beiden Förder-Einheiten wieder synchron angeordnet werden und nach Verringerung der Höhendifferenz oder nach Übergabe an eine nachgelagerte Transport-Einheit liegen die beiden Artikel wie gewünscht in Querrichtung geschindelt aufeinander.

Es sollte klar sein, dass das Querschindeln nicht auf zwei quergeschindelte Artikel begrenzt ist, sondern auch drei quergeschindelte Artikel oder Teil-Portionen eine Portion bilden können, indem insbesondere der mittlere Artikel im fertigen Zustand unten liegt und auf seinen beiden Randbereichen von dem jeweils seitlichen Rand eines links und rechts davon versetzten jeweils anderen Artikels überlappend aufliegt.

Auch mehrfach als dreifach in die gleiche Richtung quergeschindelte Artikel können erzielt werden, wobei dann jedoch mit jedem weiteren Artikel der benötigte seitliche Versatz für das Erzielen der Überlappung vom Auflegen auf seine Förder-Einheit bis zur Kontaktierung des benachbarten Artikels zunimmt, was die Realisierung erschwert.

Die notwendige Höhendifferenz zwischen den Auflageflächen hängt nicht nur von der Dicke des beim Überlappen unteren Artikels ab, sondern vor allem auch davon, wie stark der überstehende Randbereich des nur teilweise auf einer Transport-Einheit aufliegenden Artikels herabhängt.

Da dies von der Steifigkeit des Artikels und diese von weiteren physikalischen Parametern wie etwa der Temperatur und Konsistenz des Artikels abhängt, werden vorzugsweise die relevanten physikalischen Parameter der Artikel, zumindest des nach Überlappung oben liegenden Artikels, ermittelt, beispielsweise
- die Biegesteifigkeit des Artikels um eine in Laufrichtung gerichtete Achse,
   und / oder
- dessen Temperatur,
   und / oder
- dessen Gewicht,
   und / oder
- dessen Wassergehalt, ableitbar aus seiner elektrischen Leitfähigkeit.

Die ermittelten Parameter können von der Steuerung dazu benutzt werden, um beispielsweise automatisch die benötigte Höhendifferenz zwischen den beiden Auflageflächen zu steuern, denn je weniger biegesteif der obere der beiden Artikel ist und je weiter dieser in seinem seitlichen Überstand herabhängt, umso größer muss die Höhendifferenz gewählt werden.

Das gewünschte Maß der Überlappung wird dagegen in der Regel manuell oder automatisch in die Steuerung eingegeben, und wird von der Steuerung, vorzugsweise automatisch, ebenfalls zum Steuern des notwendigen Maßes an Höhendifferenz mitberücksichtigt.

Hinsichtlich der Überlappungs-Einheit zum Quer-Schindeln von Artikeln umfasst diese zunächst bekanntermaßen zwei in der Aufsicht betrachtet in Querrichtung nebeneinanderliegende Förder-Einheiten, deren Auflageflächen zumindest über einen bestimmten begrenzten Bereich in Längsrichtung, also einer der Laufrichtungen der beiden Förder-Einheiten, um eine Höhendifferenz auseinanderliegen, die mindestens der Höhe des Artikels entspricht, auf dem der andere Artikel teilweise aufliegen soll.

Ferner umfasst eine solche Überlappungs-Einheit eine Steuerung zur Steuerung der beweglichen Teile dieser Überlappungs-Einheit.

Erfindungsgemäß wird die bestehende Aufgabe durch die Überlappungs-Einheit gelöst, indem in der Aufsicht betrachtet die Förder-Einheiten selbst in Querrichtung nicht überlappend angeordnet sind, sondern lediglich über einen Längsbereich ihrer Förderstrecke so eng nebeneinander angeordnet sind oder angeordnet werden können, dass der nur teilweise auf einem der beiden Förder-Einheiten aufliegende Artikel den auf der anderen Förder-Einheit aufliegenden, meist nahe an dessen Rand aufliegenden, Artikel im gewünschten Maß in Querrichtung überlappen kann.

Auf diese Art und Weise muss die Höhendifferenz zwischen den Auflageflächen der beiden Förder-Einheiten nicht mehr mindestens der Bauhöhe der gesamten Förder-Einheit entsprechen wie bei der bekannten Lösung, in der die beiden Förder-Einheiten selbst einander überlappen, sondern nur noch um mindestens die Höhe des nach Überlappung unten liegenden Artikels oder etwas mehr.

Die Steuerung einer solchen Überlappungs-Einheit muss dazu bestimmt sein und entsprechend ausgelegt sein, das vorgeschriebene Verfahren zum Querschindeln mit Hilfe dieser Überlappungs-Einheit durchzuführen.

Der bauliche Aufwand für eine solche Überlappungs-Einheit ist wesentlich geringer als bei den Bekannten Bauformen. Je nachdem, wie die notwendige Höhendifferenz erzielt wird oder ob eine anschließende Übergabe an eine andere Transport-Einheit unmittelbar nach Herstellen der Überlappung gewünscht ist, ist eine solche Überlappungs-Einheit unterschiedlich ausgebildet:
In einer Ausführungsform können die Laufrichtungen der beiden Förder-Einheiten in der Aufsicht betrachtet in einem spitzen Zwischenwinkel aufeinander zugerichtet sein, der vorzugsweise maximal 30%, besser maximal 20%, besser maximal 15% beträgt.

Wenn sich dabei die Auflageflächen um die benötigte Höhendifferenz versetzt zueinander befinden, wird durch dieses aneinander Annähern der beiden Förder-Einheiten in Transportrichtung die Überlappung auf einfache Art und Weise erzeugt.

Danach, also nach Erzielen der seitlichen Überlappung, können die Laufrichtungen der beiden Förder-Einheiten wieder parallel zueinander ausgerichtet sein, insbesondere indem ein entsprechendes Förderband als Förder-Einheit seine Laufrichtung ändert - was wie vorbeschrieben vor allem bei Glieder-Förderbändern oder Riemen-Förderbändern, insbesondere Rundriemen-Förderbändern, auf einfache Art und Weise möglich ist - und erst recht bei einer Förder-Einheit, die aus einzelnen, vorzugsweise unabhängig voneinander steuerbaren, Förder-Schlitten besteht, egal ob diese spurgeführt sind oder auf einer Fahrfläche frei verfahrbar sind.

Eine Änderung der Laufrichtungen der beiden Förder-Einheiten ist nicht notwendig, wenn diese von Anfang an auch in dem Bereich, in dem die Überlappung der beiden darauf liegenden Artikel hergestellt wird, parallel zueinander verlaufen.

Dies ist dann möglich, wenn die Überlappungs-Einheit zumindest bei einer der beiden, insbesondere als Förderband ausgebildeten, Förder-Einheiten eine Querverfahr-Vorrichtung besitzt, mit der diese Förder-Einheit, insbesondere dieses Förderband, insgesamt in Querrichtung auf das andere Förderband zu verfahren werden kann, auf dem der andere Artikel vollflächig liegt, natürlich erst nachdem eine entsprechende Höhendifferenz zwischen den beiderseitigen Auflageflächen vorhanden ist.

Wenn die Überlappungs-Einheit ferner so ausgebildet ist, dass die beiden Förder-Einheiten hinsichtlich ihrer Förder-Geschwindigkeit und auch hinsichtlich ihres Anhaltens und Wieder-Ingangsetzens unabhängig voneinander antreibbar sind, können beispielsweise zwei Förderbänder oder auch zwei parallel fahrende Förder-Schlitten mit ihren Auflageflächen am stromaufwärtigen Ende der Transportstrecke auf gleicher Höhe liegend angeordnet sein, wenn die Überlappungs-Einheit so ausgebildet ist, dass die beiden Artikel zeitversetzt auf die Förder-Einheiten abgelegt werden können und zwar von Anfang an mit der notwendigen seitlichen Überlappung, aber in Längsrichtung voneinander beabstandet.

Dann können nach Herstellen der Höhendifferenz zwischen den Auflageflächen die beiden Artikel übereinander positioniert und nach Reduzieren der Höhendifferenz bei Bedarf unmittelbar danach wieder auf einander quergeschindelt abgelegt werden.

Zur Erzielung der Höhendifferenz können bei der Ausbildung der Förder-Einheiten als Band-Einheiten die Obertrume der beiden Förderbänder hinsichtlich der Höhe unterschiedlich geführt werden, also bei Beginn am stromaufwärtigen Ende auf der gleichen Höhe angeordnet und stromabwärts davon hinsichtlich der Höhe auseinandergeführt werden, oder die stromaufwärtigen Enden der beiden Auflageflächen sind von Anfang an um die benötigte Höhendifferenz zueinander beabstandet in der Höhe.

Eine solche Überlappungs-Einheit kann eine selbstständige Maschine sein, die in einer Verarbeitungslinie stromabwärts der z.B. Aufschneide-Maschine zum Aufschneiden von Produkt-Kalibern in Scheiben angeordnet ist, oder sie kann Bestandteil einer solchen Aufschneide-Maschine sein.

Dann wird die bestehende Aufgabe für eine Aufschneide-Maschine dadurch gelöst, dass diese eine Überlappungs-Einheit bereits enthält, insbesondere indem wenigstens zwei der in der Aufsicht betrachtet nebeneinanderliegenden Abförderer der Abförder-Einheiten einer solche Aufschneide-Maschine, mit der die abgetrennten Scheiben abgefördert werden, die Förder-Einheiten der Überlappungs-Einheit sind und entsprechend ausgebildet, angeordnet sowie ansteuerbar sind.

### c) Ausführungsbeispiele

Ausführungsformen gemäß der Erfindung sind im Folgenden beispielhaft näher beschrieben. Es zeigen:
- **Figuren 1a, b:**: eine Aufschneide-Maschine in Form eines Slicers gemäß dem Stand der Technik in unterschiedlichen perspektivischen Ansichten,
- **Figuren 1c:**: die Aufschneide-Maschine der **Figuren 1a****, b** in der Seitenansicht,
- **Figuren 2a:**: einen vereinfachten vertikalen Längsschnitt durch die Aufschneide-Maschine der **Figuren 1a** **- c**, also in gleicher Blickrichtung wie **Figur 1c**, in dem die verschiedenen Förderbänder besser zu erkennen sind, mit in die Aufschneidestellung hochgeklapptem Zufuhrband,
- **Figuren 2b:**: einen Längsschnitt gemäß **Figur 2a**, aber mit in die Beladestellung herabgeklapptem Zufuhrband und fortgeschrittenem Aufschneidezustand des Produkt-Kalibers,
- **Figur 3a, b:**: eine erste Bauform einer Überlappungseinheit in Aufsicht und Seitenansicht am Beginn des Überlappungsvorganges,
- **Figur 3c:**: eine Seitenansicht einer alternativen zweiten Bauform,
- **Figur 4a, b:**: die erste Bauform der Überlappungseinheit in Aufsicht und Seitenansicht am Ende des Überlappungsvorganges,
- **Figur 5a, b:**: eine dritte Bauform einer Überlappungseinheit in Aufsicht und Seitenansicht am Beginn des Überlappungsvorganges,
- **Figur 5c:**: eine andere Bauform der Umlenkeinheit,
- **Figur 6a, b:**: eine vierte Bauform einer Überlappungseinheit in Aufsicht und Seitenansicht am Beginn des Überlappungsvorganges,
- **Figur 7a, b:**: die vierte Bauform der Überlappungseinheit in Aufsicht und Seitenansicht am Ende des Überlappungsvorganges,
- **Figur 8a, b:**: eine fünfte Bauform der Überlappungseinheit in Aufsicht und Seitenansicht.

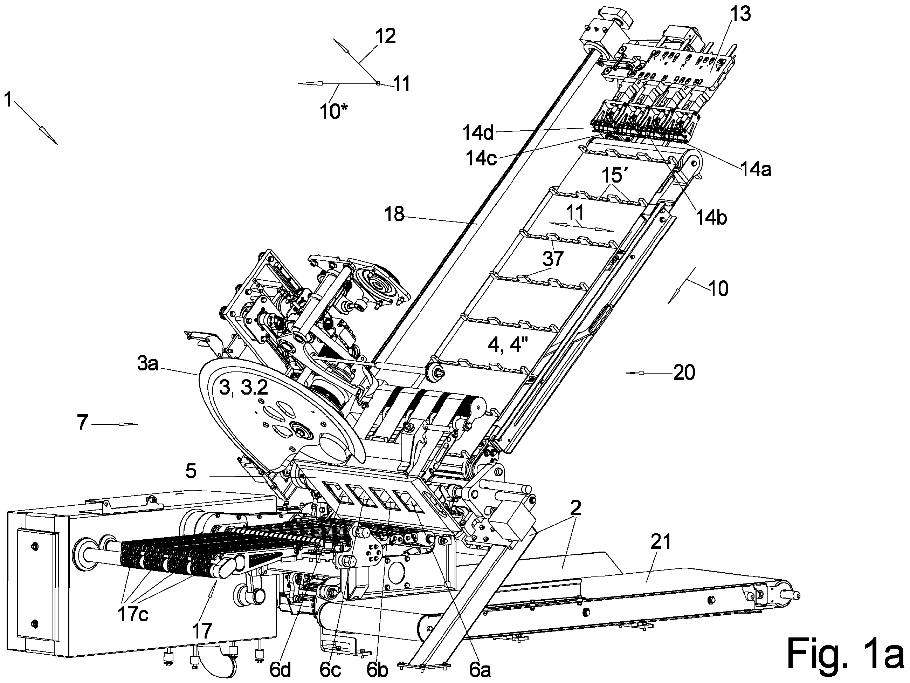

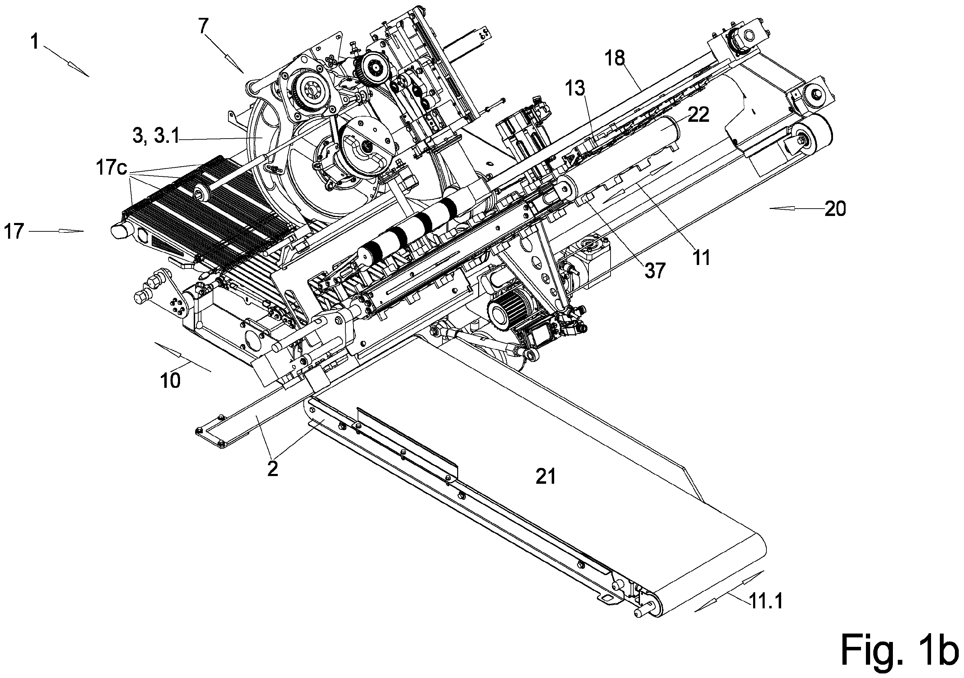

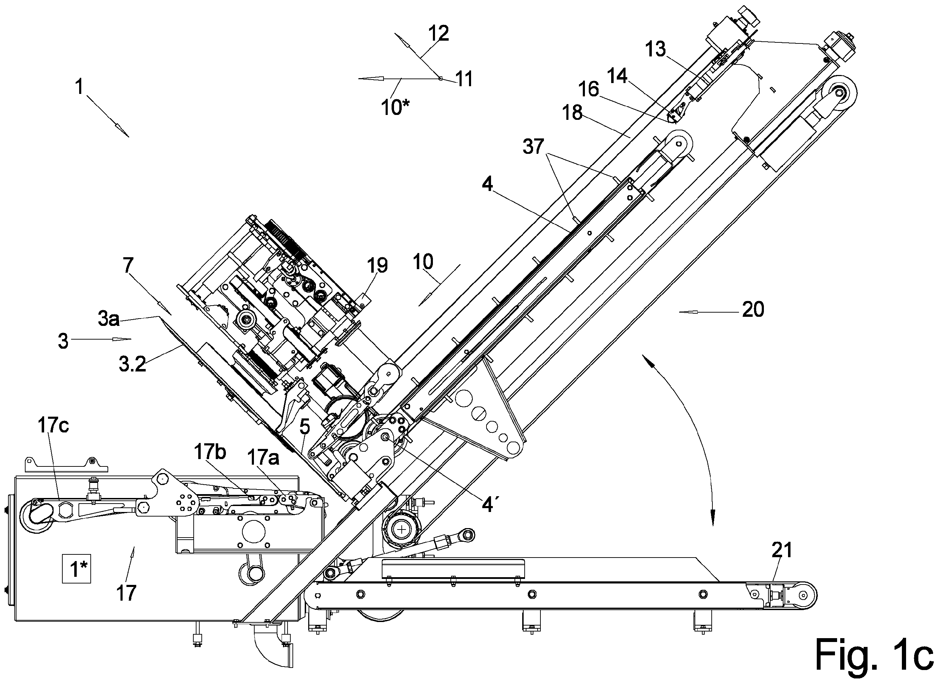

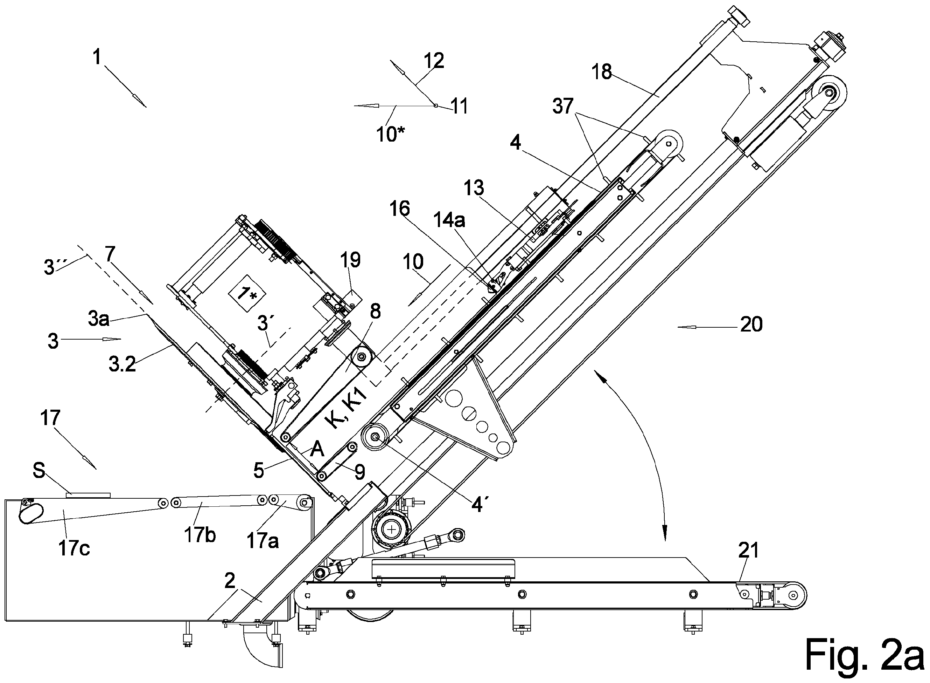

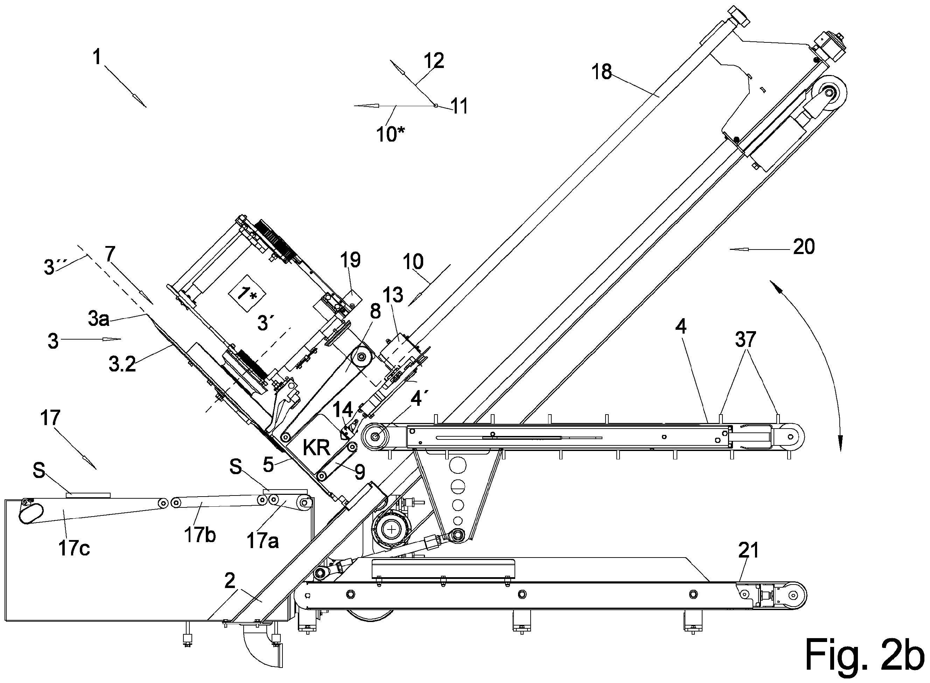

Die **Figuren 1a****,** **1b** zeigen unterschiedliche perspektivische Ansichten eines Slicers 1 zum gleichzeitigen Aufschneiden von mehreren - nur in den **Figuren 2a****, b** dargestellten - Produkt-Kalibern K nebeneinander und Ablegen in geschindelten Teil-Portionen P1, P2 aus je mehreren Scheiben S, oder nur einzelner Scheiben S, wie in **Figur 2b** dargestellt mit einer generellen Durchlaufrichtung 10* durch den Slicer 1 von links nach rechts sowie **Figur 1c** eine Seitenansicht dieses Slicers 1.

**Figur 2a** zeigt einen - durch Weglassen seitlicher Abdeckungen besser verständlichen - Vertikalschnitt durch einen solchen Slicer 1 mit gleicher Blickrichtung wie **Figur 1c**.

Der Grundaufbau des Slicers 1 besteht darin, dass einer Schneideinheit 7 mit einem rotierenden Sichelmesser 3 in diesem Fall vier quer zur Zufuhrrichtung 10 nebeneinanderliegende Produkt-Kaliber K von einer Zufuhreinheit 20 zugeführt werden, von deren vorderen Enden das rotierende Sichelmesser 3 jeweils bei einer Umdrehung, also quasi gleichzeitig, eine Scheibe S abtrennt.

Die Zufuhreinheit 20 umfasst einen Zuförderer 4 in Form eines endlosen, umlaufenden Zufuhr-Bandes 4, dessen Obertrum zumindest in Zufuhrrichtung 10, vorzugsweise auch entgegen hierzu antreibbar ist. Die Kaliber K liegen auf dem Zufuhr-Band 4 auf und sind in Querrichtung 11 durch Abstandhalter 37 positioniert, die vom Zufuhr-Band 4 nach radial außen abstehen.

Für das Aufschneiden der Produkt-Kaliber K befindet sich der Zuförderer 4 in der in den **Figuren 1a** **- c** sowie **Figur 2a** dargestellten Schrägstellung mit tiefliegendem schneidseitigem, vorderen Ende und hochliegendem, hinteren Ende, aus der er um eine in seiner Breitenrichtung, der 1. Querrichtung 11, verlaufende Schwenkachse 20', die sich in der Nähe der Schneideinheit 7 befindet, herabgeklappt werden kann in eine etwa horizontale Beladestellung gemäß **Figur 2b**.

Das hintere Ende eines in der Zufuhreinheit 20 liegenden Kalibers K ist jeweils von einem Greifer 14a - d formschlüssig mit Hilfe von Greiferklauen 16 gehalten.

Diese Greifer 14a - 14d sind an einer gemeinsamen Greifer-Einheit 13 befestigt, welche entlang einer stangenförmigen Greifer-Führung 18 in Zufuhrrichtung 10 verfahren werden kann.

Dabei ist sowohl der Vorschub der Greifer-Einheit 13 als auch der Zuförderer 4 gesteuert antreibbar, wobei jedoch die konkrete Zufuhrgeschwindigkeit der Kaliber K durch eine sogenannte obere und untere, angetriebene Produkt-Führung 8, 9 bewirkt wird, die an der Oberseite und Unterseite der aufzuschneidenden Kaliber K in deren vorderen Endbereichen nahe der Schneideinheit 7 angreifen:
Die vorderen Enden der Kaliber K sind jeweils durch eine für jedes Kaliber vorhandene Brillenöffnung 6a - d geführt, die in einer plattenförmigen Schneidbrille 5 ausgebildet sind. Unmittelbar vor der vorderen, schräg nach unten weisenden Stirnfläche der Schneidbrille 5 verläuft die Schneidebene 3", in der das Sichelmesser 3 mit seiner Schneidkante 3a rotiert und damit den Überstand der Kaliber K aus der Schneidbrille 5 als Scheibe S abtrennt. Die Schneidebene 3" wird von den beiden Querrichtungen 11, 12 aufgespannt.

Dabei dient der Innenumfang der Brillenöffnungen 6a - d der Schneidkante 3a des Messers 3 als Gegenschneide.

Häufig sind die beiden Produktführungen 8, 9 in der ersten Querrichtung 11 separat für jedes Kaliber K vorhanden und separat ansteuerbar.

Die obere Produktführung 8 kann in der zweiten Querrichtung 12 - die lotrecht zur Fläche des Obertrums des in die Aufschneidestellung hochgeklappten Zuförderers 4 verläuft - verlagerbar sein zur Anpassung an die Höhe des Kalibers K in dieser Richtung. Ferner kann mindestens eine der Produktführungen 8, 9 um eine ihrer Umlenkrollen 8a, 8b, 9a, 9b verschwenkbar ausgebildet sein, um die Richtung des am Kaliber K anliegenden Trumes ihres Förderbandes begrenzt verändern zu können.

Die schräg im Raum stehenden, gerade abgetrennten, Scheiben S fallen auf eine unterhalb der Schneidbrille 5 beginnende Abförder-Einheit 17, die in diesem Fall aus in Durchlaufrichtung 10* mehreren mit ihren Obertrumen etwa fluchtend hintereinander angeordneten Abförderern 17a, b, c besteht.

Unterhalb der Zuförder-Einheit 20 befindet sich ein etwa horizontal verlaufender Resteförderer 21 ebenfalls in Form eines endlos umlaufenden Förderbandes, welcher mit seinem vorderen Ende unterhalb der Schneidbrille 5 und unmittelbar unter oder hinter der Abförder-Einheit 17 beginnt und mit seinem Obertrum darauf fallende Reste von dort aus entgegen der Durchlaufrichtung 10* nach hinten abtransportiert.

Deshalb kann zumindest der in Durchlaufrichtung 10* erste Förderer 17a mit seinem Obertrum entgegen der Durchlaufrichtung 10* angetrieben werden, sodass ein darauf fallendes z.B. Reststück nach hinten transportiert werden kann und auf den tiefer liegenden Reste-Förderer 21 fällt.

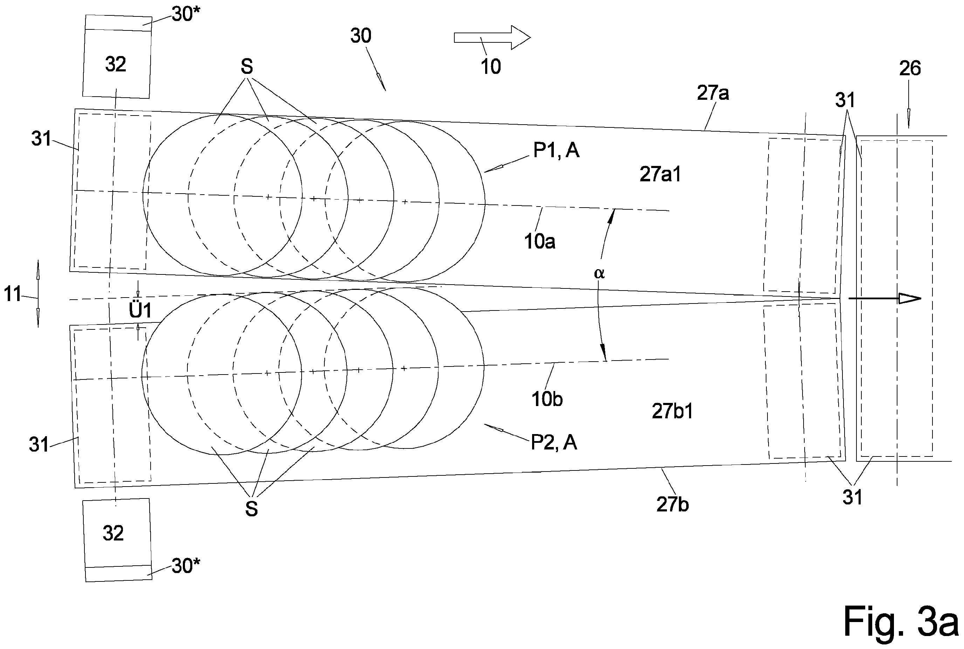

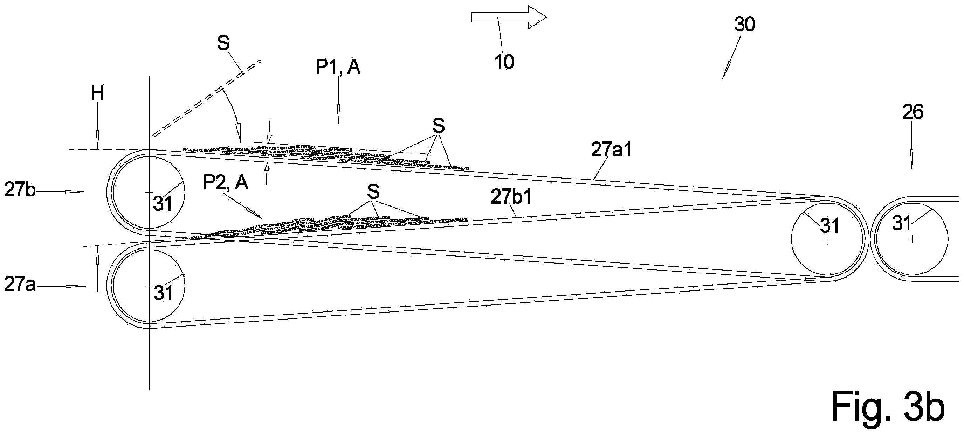

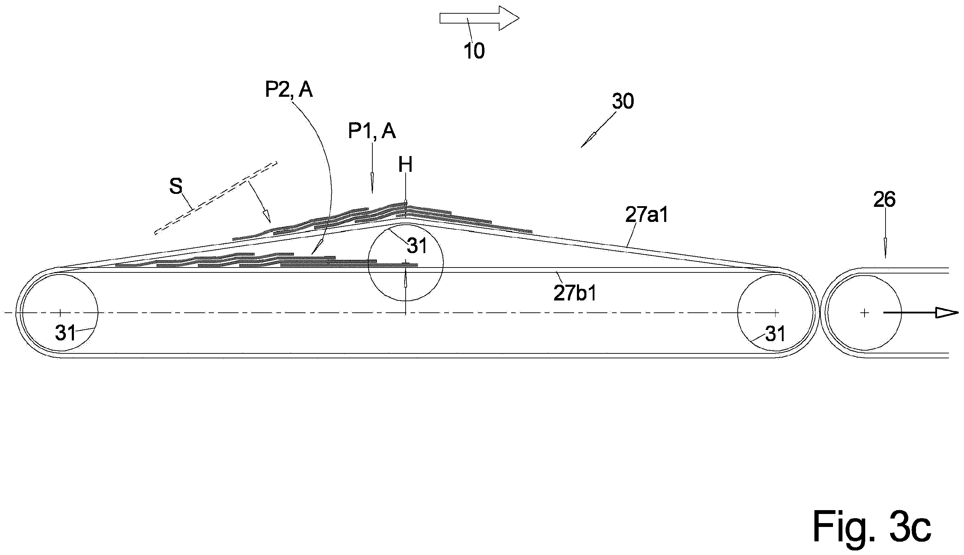

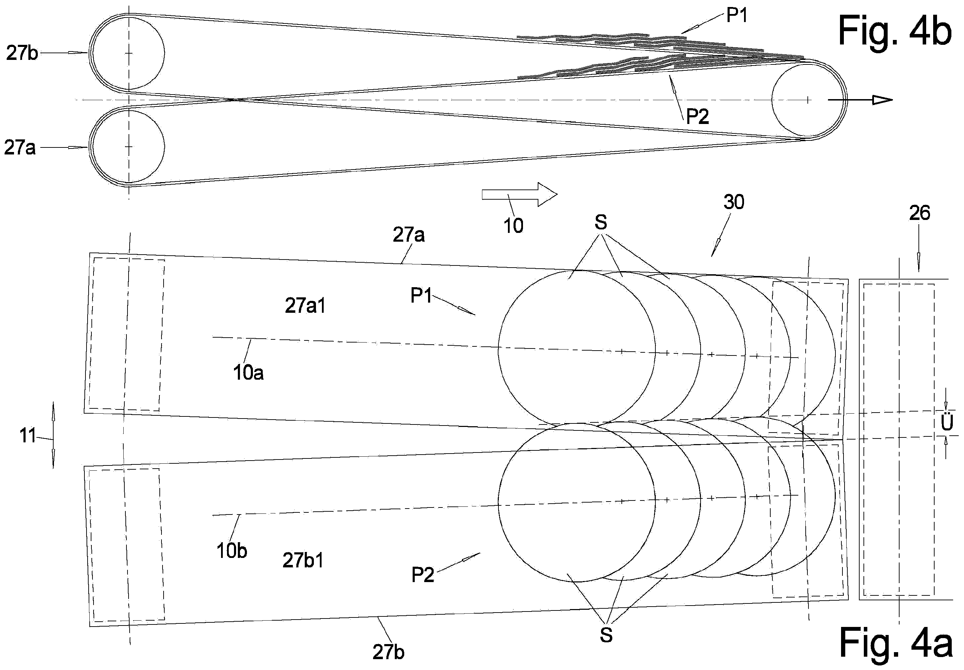

Die **Figuren 3a****, b, 4a, b** zeigen eine erste Bauform der Überlappungs-Einheit 30 jeweils in Aufsicht und in der Seitenansicht.

Wie **Figur 3a** erkennen lässt, weist die Überlappungs-Einheit 30 in der Aufsicht betrachtet zwei nebeneinander laufende Förder-Einheiten 27a, 27b auf - die Bestandteil der Abförder-Einheit 17 sein können - hier dargestellt jeweils als Gurt-Förderer mit jeweils einem endlos über zwei Umlenkwalzen 31 umlaufenden Förder-Gurt oder Förder-Band, dessen Obertrum in diesem Fall von links nach rechts in einer generellen Transportrichtung 10 angetrieben wird. Die beiden Förder-Einheiten 27a, b verlaufen jedoch in der Aufsicht betrachtet nicht parallel zueinander, sondern ihre in der Aufsicht betrachteten Förderrichtungen 10a, b differieren um einen geringen Zwischenwinkel α von in der Regel unter 20°, sodass die beiden Förderer 27a, b am Anfang ihrer Transportstrecke, in **Figur 3a** links, in der Aufsicht betrachtet einen Abstand zueinander haben, aber am Ende ihrer Transportstrecke, in **Figur 3a** rechts, einen geringeren Abstand zueinander aufweisen, insbesondere so nah wie möglich aneinander angenähert sind.

Vorzugsweise sind die beiden Förderer 27a, b von jeweils einem Motor 32 und damit unabhängig voneinander angetrieben, wobei die Motore 32 von einer Steuerung 30* der Überlappungs-Einheit gesteuert werden.

Auf am Beginn der Transportstrecke, wird auf der jeweilige Auflagefläche 27a1, 27b1 jedes der beiden Förder-Einheiten 27a, b eine Teil-Portion P1 bzw. P2 von in Transportrichtung 10 geschindelten Scheiben S erzeugt oder aufgelegt, die beispielsweise direkt von einer stromaufwärts davon angeordneten Aufschneide-Maschine herabfallen können, wie in der Seitenansicht der **Figur 3b** dargestellt.

Wie **Figur 3b** ferner zeigt, besitzen die Obertrume der beiden Förderer, also deren Auflageflächen 27a1, 27b1, am Beginn der Förderstrecke, also an der Längsposition der Rotationsachsen ihrer in Transportrichtung stromaufwärts liegenden Umlenkwalzen 31, über eine Höhedifferenz H zueinander.

Vorzugsweise befinden sich die stromabwärtigen Umlenkwalzen 31 und/oder die Obertrume der beiden Förder-Einheiten 27a, b auf der gleichen Höhe.

Für die Überlappung wird der Artikel A, in diesem Fall die Teil-Portion P1, auf der am Anfang der Transportstrecke tiefer liegenden Auflagefläche 27a1 so aufgelegt, dass zur anderen Förder-Einheit 27b hin der Artikel, also die Scheiben S der Teil-Portion P1, möglichst nah am entsprechenden Rand der Auflagefläche 27a1 des Förderers 27a liegen.

Auf der anderen Auflagefläche 27b1 dagegen wird die Teil-Portion P2, vorzugsweise an der gleichen Längsposition, so erzeugt oder aufgelegt, dass sie in Richtung des anderen Förderers 27a über den entsprechenden Rand der Auflagefläche 27b1 sogar um einen Überstand Ü1 vorsteht, wofür die Scheiben S natürlich eine gewisse Steifigkeit besitzen sollten, damit sie nicht zu stark nach unten herabhängen.

Wenn die beiden Artikel A wie Teil-Portionen P1, P2, vorzugsweise von Anfang an, mit der gleichen Geschwindigkeit, also synchron, in Transportrichtung 10 bewegt werden mittels der jeweiligen Förder-Einheit 27a, b so verringern sie ihre anfängliche Höhendifferenz H immer mehr, bis sie nahe an den stromabwärtigen Umlenkwalzen 31, also dem Ende der Transportstrecke, in Kontakt zueinander geraten - wie in **Figur 4a****, b** dargestellt - indem der seitliche Überstand Ü1 der Teil-Portion P2 auf dem ihm zugewandten Randbereich der danebenlaufenden Teil-Portion P1 aufliegt.

Hierfür dürfen die stromabwärtigen Umlenkwalzen 31 oder Obertrume keinen oder eine nur so geringe Höhendifferenz zueinander aufweisen, dass die beiden Teil-Portionen in Kontakt zueinanderstehen, also aufeinander aufliegen. Dies ist im Übrigen auch deshalb notwendig, da sich in aller Regel stromabwärts der beiden nebeneinander laufenden Förder-Einheiten 27a, b ein nachfolgender Förderer 26, hier wieder dargestellt als Gurt-Förderer, befindet, der sich mindestens über die Breite der gesamten quer-geschindelten Portion, hier über die Breite der beiden nebeneinander in der Aufsicht liegenden Gurtförderer 27a, b, erstreckt und die überlappende gesamte Portion aufnimmt und abtransportiert.

Für den Fall, dass die unterschiedliche Höhenlage der Anfänge der beiden Förder-Einheiten 27a, b Probleme bereitet, zeigt **Figur 1c** in der Seitenansicht eine alternative Lösung, bei der sich sowohl die beiden stromaufwärtigen Umlenkwalzen 31 als auch die beiden stromabwärtigen Umlenkwalzen 31 der beiden Förderer 27a, b auf gleicher Höhe befinden. Die Höhendifferenz H wird dadurch erzeugt, dass das Obertrum desjenigen Förderer 27b, auf dem die seitlich überstehende Teil-Portion P2 oder Artikel A aufgelegt ist, über eine weitere, mittlere Umlenkwalze 31 im mittleren Bereich der Transportstrecke geführt wird, deren Oberseite um die Höhendifferenz H über der Oberseite der stromabwärtigen und/oder stromaufwärtigen Umlenkwalze 31 dieses Förderers positioniert ist.

Die in den **Figuren 3a bis 5b** dargestellte Übergabe der quer überlappten Gesamtportion am Ende der beiden nebeneinander laufenden Förder-Einheiten 27a, b an einen nachfolgenden Abförderer 26 ist sinnvoll, da eine Änderung der jeweiligen Transportrichtung10a, b von winkeliger Lage zueinander in parallele Lage zueinander innerhalb ein und desselben Gurt-Förderers 27a, b nicht bzw. nur mit großem konstruktivem Aufwand möglich ist.

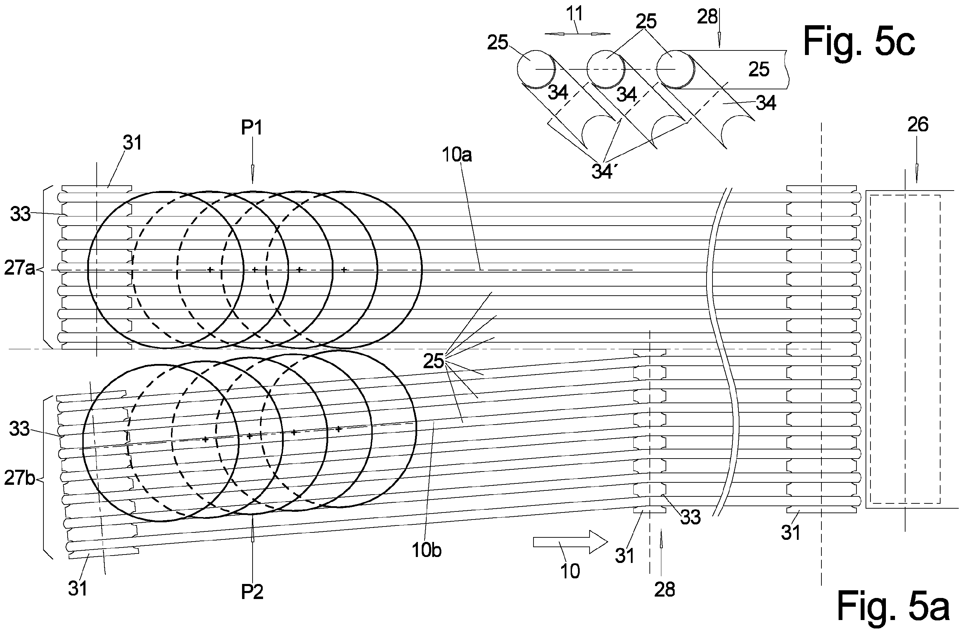

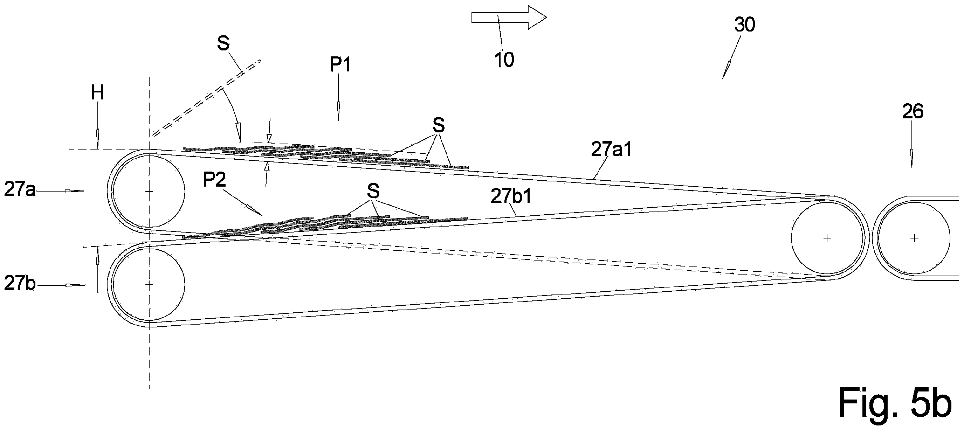

Werden - wie in **Figur 5a****-c** dargestellt - als Förder-Einheiten 27a, b jedoch keine Gurt-Förderbänder, sondern Riemen-Förderbänder verwendet, bei denen statt eines endlos umlaufenden Gurtes mehrere endlos umlaufende, quer zur Transportrichtung nebeneinander angeordnete Riemen 25, vorzugsweise Rundriemen 25, vorhanden sind, so ist eine solche Änderung der Transportrichtung z.B. 10b mittels einer Umlenk-Vorrichtung 28 durchaus möglich:
Umlenkwalzen 31 für ein Riemen-Förderband besitzen in ihrer Mantelfläche axial beabstandet Umfangsnuten, in denen jeweils einer der Riemen 25 läuft und dadurch formschlüssig gegen Versatz in Querrichtung 11 geführt sind.

Wie **Figur 5a** zeigt, verlaufen die Transportrichtungen 10a, 10b der beiden Riemen-Förderbänder im ersten Teil ihrer Transportstrecke wieder um einen Zwischenwinkel α unterschiedlich zueinander und in Transportrichtung 10 aufeinander zu, sodass am Ende dieser unterschiedlich ausgerichteten Teil-Transportstrecken vorzugsweise die dem jeweils anderen Riemen-Förderband zugewandten ersten Riemen zueinander den gleichen Abstand besitzen wie die Riemen innerhalb eines der beiden Riemen-Förderbänder.

An dieser Umlenk-Stelle ist als Umlenk-Vorrichtung zum Parallellauf aller Riemen 25 der beiden Riemen-Förderbänder 27a, b in einer der beiden Riemen-Fördereinheiten, hier 27b, eine weitere Umlenkwalze 31 mit Umfangsnuten für die Riemen 25 angeordnet, wobei darin die Nuten relativ zur Querschnittsform der Riemen 25 so dimensioniert sind und die Riemen 25 darin so tief eintauchen, dass sie trotz der Umlenkung jedes Riemens 25 durch jeweils eine der Umfangsnuten in dieser Umlenkwalze 31 nicht aus ihrer Nut herausspringen.

Die stromabwärtige Umlenkwalze 31 am Ende der Förderstrecke ist vorzugsweise über die gesamte Breite der beiden vorher getrennten Förder-Einheiten 27a, b durchgehend ausgebildet und dies ist vorzugsweise auch die angetriebene Umlenkwalze, wobei alle Umfangsnuten darin den gleichen Abstand in Querrichtung 11 zueinander aufweisen.

Auf diese Art und Weise kann eine Übergabe an einen nachfolgenden Förderer 26 ab der Position der Überlappung der beiden Teil-Portionen P1, P2 vorerst vermieden werden und erst bei Bedarf wesentlich weiter stromabwärts eine Übergabe an eine nächste Einheit erfolgen.

Eine solche in der Aufsicht betrachtete Umlenkung der Förderrichtung der Riemen eines Riemen-Förderbandes ist umso einfacher möglich, je kleiner die Erstreckung des Querschnittes des einzelnen Riemens 25 in Querrichtung 11 zur Höhe des Querschnittes ist.

Besonders einfach ist eine Umlenkung mit Rundriemen möglich, also Riemen 25 mit rundem Querschnitt, wie in **Figur 5c** dargestellt:
Die Umfangsnuten für die einzelnen Riemen des Förderers 27b sind dabei nicht in einer gemeinsamen Umlenkwalze 31 untergebracht, sondern jeder Riemen 25 wird durch eine eigene Umlenkrolle 34 mit Umfangsnut in ihrem Umfang umgelenkt. Die Umlenkrollen 34 sind damit in ihrer axialen Richtung in aller Regel nicht länger als der Durchmesser des Rundriemens 25, und die einzelnen Umlenkrollen 24 sind mit parallelem Verlauf ihrer Rotationsachsen 34' zueinander mit einem Abstand entsprechend dem Abstand der Rundriemen 25 in Querrichtung 11 angeordnet. Dabei stehen die auf der jeweiligen Rotationsachse 34' lotrecht stehenden jeweiligen Hauptebenen der einzelnen Umlenkrollen 34 - die ebenfalls parallel zueinander liegen - schräg zur Auflagefläche 27a1 bzw. 27b1 des Riemen-Förderers an dieser Stelle, sodass der Riemen 25 aus der Umfangsnut der Umlenkrolle 34 nicht herausrutschen können, wenn diese wie üblich an die Umfangskontur des Rundriemens 25 ausreichend angepasst ist.

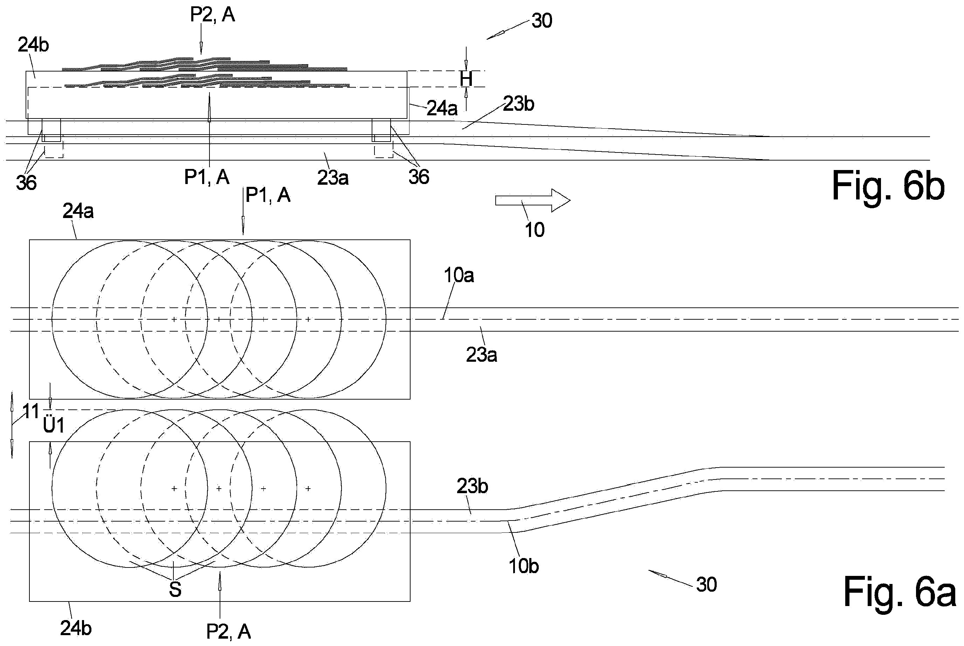

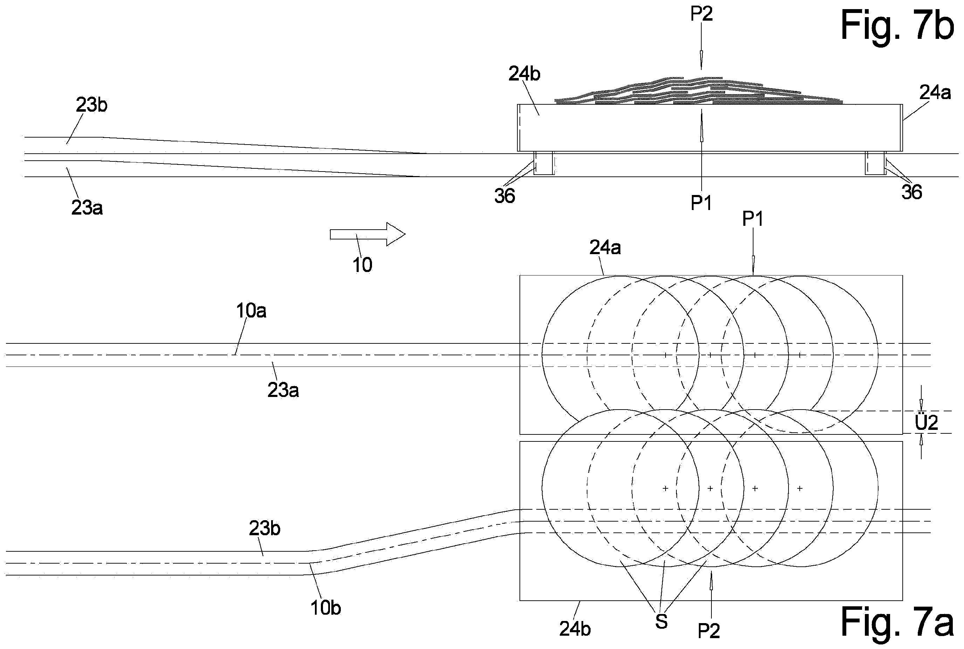

Die **Figuren 6a****, b, 7a, b** zeigen eine vierte Bauform einer Überlappungs-Einheit 30:
Dabei werden die zu überlappenden Artikel A, hier wiederum die Teil-Portionen P1, P2, nicht auf der Auflagefläche des Obertrums eines endlos umlaufenden Gurt- oder Riemen-Förderers angeordnet, sondern jeder der Artikel A, also hier jede der Teil-Portionen P1, P2 auf der Oberseite eines - insbesondere unabhängig voneinander antreibbaren - Schlittens 24a bzw. 24b angeordnet, die in diesem Fall spurgeführt sind, indem sie z.B. von der Unterseite nach unten abragend und in Transportrichtung 10 versetzt jeweils mindestens zwei Führungselemente wie etwa je eine Führungsrolle 36 aufweisen, die in Querrichtung 11 formschlüssig in einer die jeweilige Transportrichtung 10a, 10b vorgebenden Spurführung 23a, b geführt sind.

Selbstverständlich kann als Spurführung auch ein erhabenes Bauteil wie eine Leiste verwendet werden, und umgekehrt am Schlitten 24 Führungs-Gegenelemente vorhanden sein, die beidseits von außen an dieser erhabene Spurführung 23 angreifen. Ebenso können die Schlitten 24 auch ohne formschlüssige Führung auf einer ebenen Fläche ohne Nuten und Erhebungen oder anderer formschlüssiger Spurführung gesteuert verfahrbar sein, sei es mit Hilfe eigener angetriebener und gesteuerter Räder oder mittels eines anderen Antriebssystems.

Analog zu der ersten Bauform der **Figuren 3a****, b, 4a, b** besitzen am Anfang der Transportstrecke die beiden Schlitten 24a, b einen solchen Abstand in Querrichtung 11, dass die auch hier auf einem der beiden Schlitten (hier 24b), mit einem seitlichen Überstand Ü1 aufgelegte Teil-Portion P2 keine Berührung mit dem daneben befindlichen Schlitten 24a und der darauf aufgelegten Teil-Portion P1 besitzt.

In dieser Ausgangslage besitzen die Schlitten 24a, b hinsichtlich ihrer Oberseite wiederum eine Höhedifferenz H, die vorzugsweise größer ist als die Höhe h des Artikels A, in diesem Fall der Teil-Portion P1, die nach Überlappung die untere Teil-Portion bzw. Artikel ist.

Wie in **Figur 6a****, b** dargestellt befinden sich also in der Ausgangsstellung die auf den Schlitten 24a bzw. 24b aufgelegten Teil-Portionen P1 bzw. P2 sowohl in der Aufsicht betrachtet in Querrichtung 11 zueinander versetzt und beabstandet als auch in der Höhe zueinander beabstandet.

Indem die Schlitten 24a bzw. 24b - vorzugsweise mit gleicher Geschwindigkeit in Transportrichtung 10 - in diesen Figuren von links nach rechts gefahren werden, nähern sie sich in einem Bereich der winklig zueinander stehenden Transportrichtungen 10a, b in Querrichtung soweit aneinander an, dass im Endzustand gemäß **Figur 7b** in der Aufsicht betrachtet die beiden Teil-Portionen P1, P2 weder überlappen und in der Seitenansicht betrachtet zumindest im Überlappungsbereich die beiden Teil-Portionen P1, P2 aufeinander aufliegen. Da die ParallelFührung der beiden Schlitten 24, 24b ab Erreichen dieses Überlappungszustandes problemlos möglich ist, besteht keine Notwendigkeit der Übergabe der überlappten Gesamtportion an einen nachfolgenden Förderer.

Ein weiterer Vorteil dieser Lösung besteht darin, dass im Anfangsbereich der Übergabe-Einheit 30, vor dem Bereich mit winkeligem Verlauf der beiden Transportrichtung in 10a, 10b, diese beiden Transportrichtungen ebenfalls parallel verlaufen können, und damit beim Erzeugen einer geschindelten Teilportion P1, P2 auf jedem dieser Schlitten die Längsrichtung der geschindelten Teilportion mit der Transportrichtung 10a, 10b und der Längsrichtung des Schlittens, z.B. 24b, übereinstimmt, im Gegensatz zu der Bauform bei Figur 3a.

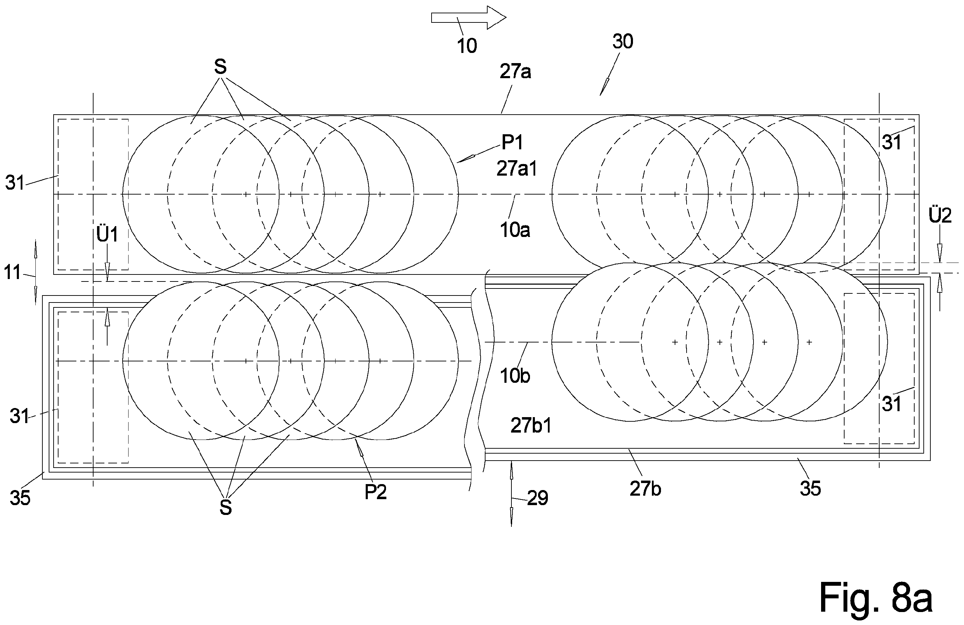

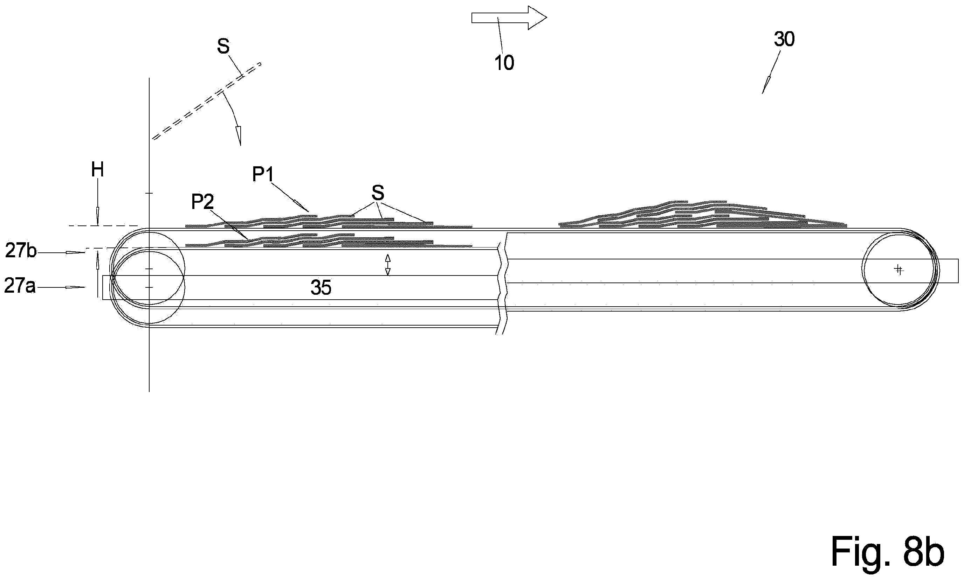

Die **Figuren 8a****, b** zeigen in Aufsicht und Seitenansicht eine fünfte Bauform, wobei in den Figuren der nicht überlappte Ausgangszustand und der überlappte Endzustand nebeneinander in der gleichen Darstellung eingezeichnet sind:
Dabei werden als Förder-Einheiten 27a, b in diesem Fall wiederum als Gurt-Förderer dargestellt, wobei diese beiden Gurt-Förderer jedoch von Anfang an zueinander parallele Transportrichtungen 10a, b aufweisen.

Die Überlappung wird in diesem Fall dadurch erzielt, dass einer der Gurt-Förderer, hier 27b, einschließlich seiner Umlenkwalzen 31 in Querrichtung 11 verlagerbar ist, auch im laufenden Zustand des Förderbandes, und einer der beiden Gurt-Förderer in der Höhe verlagerbar ist, wobei vorzugsweise beide Bewegungsmöglichkeiten an ein und derselben Förder-Einheit, hier 27b, realisiert sind.

Dies kann erreicht werden, indem die Umlenkwalzen 31 dieses verlagerbaren Förderers 27b in einem umgebenden Traggestell, beispielsweise einem Rahmen 35, aufgenommen sind, der auch den Antrieb für diesen Förderer 27b tragen kann, und die gesamte Einheit - häufig als Förder-Kassette bezeichnet - sowohl in Querrichtung 11 als auch in der Höhe mittels nicht dargestellter gesteuerter Antriebe zur Transportrichtung 10 verlagerbar ist.

Wenn somit die im Anfangsbereich der Transportstrecke mit Höhenabstand und Seitenabstand auf den beiden Förderern 27a, b aufgelegten Teil-Portionen P1, P2 durch Verlagerung beispielsweise desjenigen Förderers 27b, auf den die Teil-Portion P2 mit seitlichem Überstand Ü1 aufliegt, zunächst in Querrichtung verlagert und anschließend abgesenkt wird bis zur Kontaktierung der beiden Teil-Portionen P1, P2, ist die Überlappung mit dem gewünschten Maß Ü2 an Überlappung erzielt.

### BEZUGSZEICHENLISTE

- 1: Aufschneide-Maschine, Slicer
- 1*: Steuerung
- 2: Grundgestell
- 3: Messer
- 3: Rotationsachse
- 3": Messerebene, Schneidebene
- 3a: Schneidkante
- 4: Zuförderer, Zufuhr-Band
- 5: Schneidbrille
- 6a - d: Brillen-Öffnung
- 7: Schneideinheit
- 8: obere Produktführung, oberes Führungsband
- 8.1: Kontakt-Trum, Unter-Trum
- 8a: Brillen-seitige Umlenkrolle
- 8b: Brillen-abgewandte Umlenkrolle
- 9: untere Produktführung, unteres Führungsband
- 8.1: Kontakt-Trum, Ober-Trum
- 9a: Brillen-seitige Umlenkrolle
- 9b: Brillen-abgewandte Umlenkrolle
- 10: Transportrichtung, Längsrichtung, axiale Richtung
- 10a, b: Transportrichtung
- 10*: Durchlaufrichtung durch Maschine
- 11: 1. Querrichtung (Breite Slicer)
- 12: 2. Querrichtung (Höhen-Richtung Kaliber)
- 13: Greifer-Einheit, Greifer-Schlitten
- 14,14 a - d: Greifer
- 15: Quersteg
- 15': Auflagefläche
- 16: Greifer-Klaue
- 17: Abförder-Einheit
- 17a, b, c: Portionierband, Abförderer
- 18: Greifer-Führung
- 19: Höhen-Sensor
- 20: Zufuhreinheit
- 21: Reststück-Förderer
- 22: Reststück-Behälter
- 23: Spurführung
- 24: Transportschlitten
- 25: Riemen
- 26: nachfolgende Transport-Einheit
- 27a, b: Förder-Einheit
- 27a1: Auflagefläche
- 27b1: Auflagefläche
- 27a', 27b': Laufrichtung
- 28: Umlenk-Vorrichtung
- 29: Querverfahr-Vorrichtung
- 30: Überlappungs-Einheit
- 31: Umlenk-Walze
- 32: Motor
- 33: Umfangsnut
- 34: Umlenk-Rolle
- 34': Rotationsachse
- 35: Rahmen
- 36: Führungselement, Führungsrolle

- α: Zwischenwinkel
- A: Artikel
- h: Höhe Artikel
- H: Höhendifferenz Förderer
- K: Produkt, Produkt-Kaliber
- KR: Reststück, Kaliber-Reststück
- S: Scheibe
- P: Portion
- P1, P2: Teil-Portion
- Ü1: Überstand
- Ü2: Überlappung
- V: Verpackungselement

## Patentansprüche

1. **Verfahren** zum Quer-Schindeln von Artikeln (A), insbesondere je einer Scheibe (S) oder einer Teil-Portion (P1, P2) aus mehreren längs-geschindelten oder gestapelten Scheiben (S), in Querrichtung (11) zur Transportrichtung (10) einer Förder-Einheit, die insbesondere Teil einer Aufschneide-Maschine (1), insbesondere eines Slicers (1), ist
indem
- je ein Artikel auf jeweils einer Förder-Einheit (27a, b) abgelegt wird,
- wenigstens einer der Artikel so auf seiner Förder-Einheit (27b) positioniert wird, dass er in Querrichtung (11) zur Laufrichtung (10b) dieser Förder-Einheit (27b) über diese in Richtung der anderen Förder-Einheit (27a) vorsteht,
- zumindest über einen Längsbereich die beiden Förder-Einheiten (27a, b) so zueinander positioniert werden, dass die Auflagefläche (27b1) der Förder-Einheit (27b) mit dem quer überstehenden Artikel um eine Höhendifferenz (H), insbesondere mindestens entsprechend der Höhe (h) des Artikels (A), höher liegt als die Auflagefläche (27a1) der anderen Förder-Einheit (27a),
**dadurch gekennzeichnet, dass**
- die beiden Förder-Einheiten (27a, b) ferner so zueinander positioniert werden, dass die Förder-Einheiten (27a, b) in Querrichtung (11) in der Aufsicht betrachtet ohne Überlappung nebeneinander so eng angeordnet werden, dass der seitlich überstehende Artikel (A)den anderen Artikel (A) in Querrichtung (11) zumindest über einen Längsbereich mit einer Überlappung (Ü2) überlappt.
(Übergabe nach Herstellen der Überlappung:)

2. Verfahren nach Anspruch 1,
**dadurch gekennzeichnet, dass**
- die Förder-Einheiten (27a, b) ihre Artikel (A) in Transportrichtung (10) an eine nachfolgende Transport-Einheit (26) übergeben,
- insbesondere unmittelbar nachdem das gewünschte Maß (Ü2) an seitlicher Überlappung der beiden Artikel erreicht ist.

3. Verfahren nach einem der vorhergehenden Ansprüche,
**dadurch gekennzeichnet, dass**
- anschließend die Höhendifferenz (H) der Auflageflächen (27a1, 27b1) der beiden Förder-Einheiten (27a, b) zumindest soweit reduziert wird, dass die beiden Artikel (A) in Kontakt geraten,
- was insbesondere bereits vor der Übergabe an die nachfolgende Transport-Einheit (26) erfolgt.

4. Verfahren nach einem der vorhergehenden Ansprüche,
**dadurch gekennzeichnet, dass**
das Übergeben an die nachfolgende Transport-Einheit (26)
- entweder für beide Artikel (A) gleichzeitig,
- oder mit dem in Querrichtung (11) oben liegenden Artikel nach dem in Querrichtung (11) unten liegenden Artikel erfolgt.
(Spätester Zeitpunkt Synchronlauf:)

5. Verfahren nach einem der vorhergehenden Ansprüche,
**dadurch gekennzeichnet, dass**
spätestens ab dem Zeitpunkt des Kontaktes der beiden Artikel (A) die beiden Förder-Einheiten (27a, b) synchron angetrieben werden.
(Schräges Annähern der Abförder-Einheiten:)

6. Verfahren nach einem der vorhergehenden Ansprüche,
**dadurch gekennzeichnet, dass**
- die Laufrichtungen (10a, b) der beiden Förder-Einheiten (27a, b) in der Aufsicht betrachtet aufeinander zu gerichtet werden,
- insbesondere in einem spitzen Zwischenwinkel (a), insbesondere von weniger als 30°, vorzugsweise weniger als 20°, vorzugsweise weniger als 15°.
(Ohne Übergabe:)

7. Verfahren nach einem der vorhergehenden Ansprüche,
**dadurch gekennzeichnet, dass**
- ab der Längsposition des Herstellens des gewünschten Maßes (Ü2) an seitlicher Überlappung die Laufrichtungen (10a, 10b) der beiden Förder-Einheiten (27a, b) parallel zueinander ausgerichtet werden, insbesondere
- entweder durch Umlenkung der nebeneinander laufenden Riemen (25), wenn es sich bei der Förder-Einheit (27a, b) um ein aus mehreren parallellaufenden Riemen (25) bestehendes Riemen-Förderband handelt
- oder durch Querverfahrung der beiden parallel zueinander laufenden Förder-Einheiten (27a, b) aufeinander zu,
- oder durch Änderung der Fahrtrichtung, wenn es sich bei der wenigstens einen Förder-Einheit (27a, b) um einen Förder-Schlitten (24) handelt.
(Erzielung seitlicher Überstand:)

8. Verfahren nach einem der vorhergehenden Ansprüche,
**dadurch gekennzeichnet, dass**
- entweder auf der Auflagefläche der einen Förder-Einheit (27b) der Artikel (A) bereits mit seitlichem Überstand abgelegt wird,
- oder der Artikel (A) ohne seitlichen Überstand auf der Auflagefläche (27b1) der einen Förder-Einheit (27b) abgelegt wird, stromabwärts davon die Auflagefläche dieser Förder-Einheit (27b) von der Seite her, an der der Überstand (Ü1) gewünscht wird, schmaler wird entlang der Transportstrecke dieser Förder-Einheit (27b),
- insbesondere indem diese Förder-Einheit (27b) ein Riemen-Förderband aus mehreren parallellaufenden Riemen (25) ist und wenigstens der äußerste Riemen entlang der Transportstrecke dieser Förder-Einheit (27b) vor den anderen Riemen in das Rücktrum umgelenkt wird.
(Erzielung Höhendifferenz:)

9. Verfahren nach einem der vorhergehenden Ansprüche,
**dadurch gekennzeichnet, dass**
- entweder die beiden Förder-Einheiten (27a, b) mit ihren Auflageflächen (27a1, 27b1) am stromaufwärtigen Ende auf gleicher Höhe angeordnet werden, jedoch in Querrichtung (11) zueinander beabstandet, und entlang ihrer Transportstrecke auf die Höhendifferenz (H) zueinander gebracht werden,
- oder die beiden Förder-Einheiten (27a, b) mit ihren Auflageflächen (27a1, 27b1) am stromaufwärtigen Ende mindestens um die Höhendifferenz (H) auf unterschiedlichen Höhen zueinander angeordnet werden,
- insbesondere dabei die Laufrichtungen der beiden Förder-Einheiten (27a, b) bereits ab dem stromaufwärtigen Ende parallel zueinander angeordnet werden.
(Artikel-Parameter berücksichtigen:)

10. Verfahren nach einem der vorhergehenden Ansprüche,
**dadurch gekennzeichnet, dass**
zumindest die für die beschriebene Vorgehensweise relevanten physikalischen Parameter der in Querrichtung zu überlappenden Artikel (A), insbesondere
- Biegesteifigkeit um eine in Laufrichtung gerichtete Achse,
und/oder
- Temperatur,
und/oder
- Gewicht,
ermittelt werden oder bekannt sind und für die Berechnung der Höhendifferenz (H) und/oder des Maßes (Ü2) der Überlappung berücksichtigt werden.

11. **Überlappungs-Einheit** (30) zum Quer-Schindeln von Artikeln (A) mit einer Überlappung (Ü), insbesondere je einer Scheibe (S) oder einer Portion (P) aus mehreren längs-geschindelten oder gestapelten Scheiben (S) in Querrichtung (11) zur Transportrichtung (10) umfassend
- zwei in Querrichtung (11) zu ihren Laufrichtungen (10a, 10b) in der Aufsicht betrachtet nebeneinanderliegende Förder-Einheiten (27a, b),
- deren Auflageflächen (27a1, 27b1), zumindest über einen Längsbereich der beiden Förder-Einheiten (27a, b) um eine Höhendifferenz (H) mindestens entsprechend der Höhe des Artikels differieren oder differieren können,
- einer Steuerung (30*) zur Steuerung beweglicher Teile der Überlappungs-Einheit (30),
**dadurch gekennzeichnet, dass**
- Förder-Einheiten (27a, b) in Querrichtung (11) in der Aufsicht betrachtet ohne Überlappung zumindest über einen Längsbereich ihrer Förderstrecke eng nebeneinander angeordnet sind oder werden können,
- wenigstens das Obertrum einer Förder-Einheit (27b) zumindest über einen Längsbereich ihrer Fördererstrecke mindestens um die Höhe (h) eines Artikels (A) höher angeordnet ist oder angeordnet werden kann als das Obertrum der benachbarten Förder-Einheit (27a),
- die Steuerung (30*) dazu ausgelegt und bestimmt ist, das Verfahren nach einem der vorhergehenden Ansprüche durchzuführen.
(Schräges Annähern der Abförder-Einheiten:)

12. Überlappungs-Einheit nach Anspruch 11,
**dadurch gekennzeichnet, dass**
- die Laufrichtungen (10a, 10b) der beiden Förder-Einheiten (27a, b) in der Aufsicht betrachtet in Transportrichtung (10) aufeinander zu gerichtet sind,
- insbesondere in einem spitzen Zwischenwinkel (a), insbesondere von weniger als 30°, vorzugsweise weniger als 20°, vorzugsweise weniger als 15°,
- oder durch eine Querverfahr-Vorrichtung (29) der beiden parallel zueinander laufenden Förder-Einheiten (27a, b).
(Paralleles Weiterlaufen:)

13. Überlappungs-Einheit nach Anspruch 11 oder 12,
**dadurch gekennzeichnet, dass**
- ab der Längsposition des Herstellens des gewünschten Maßes (Ü2) an seitlicher Überlappung die Laufrichtungen (10a, 10b) der beiden Förder-Einheiten (27a, b) parallel zueinander ausgerichtet sind, insbesondere
- entweder durch eine Umlenk-Vorrichtung (28) für die nebeneinander laufenden Riemen (25) wenigstens einer der beiden Förder-Einheiten (27a, b), wenn es sich bei der Förder-Einheit (27a, b) um ein Riemen-Förderband handelt,
- oder durch Änderung der Fahrtrichtung, insbesondere der Richtung der Spurführung (23) wenn es sich bei der Förder-Einheit (27a, b) um einen in einer Spurführung (23) geführten Förder-Schlitten (24) handelt.
(Erzielung Höhendifferenz:)

14. Überlappungs-Einheit nach einem der Ansprüche 11 - 13,
**dadurch gekennzeichnet, dass**
- entweder die beiden Förder-Einheiten (27a, b) mit ihren Auflageflächen (27a1, 27b1) am stromaufwärtigen Ende auf gleicher Höhe liegen, jedoch in Querrichtung (11) zueinander beabstandet, und entlang ihrer Transportstrecke auf die Höhendifferenz (H) zueinander gebracht werden,
- oder die beiden Förder-Einheiten (27a, b) mit ihren Auflageflächen (27a1, 27b1) am stromaufwärtigen Ende mindestens um die Höhendifferenz (H) auf unterschiedlichen Höhen zueinander liegen,
- insbesondere dabei die Laufrichtungen (10a, 10b) der beiden Förder-Einheiten (27a, b) bereits ab dem stromaufwärtigen Ende parallel zueinander verlaufen.

15. **Aufschneide-Maschine** (1), insbesondere Slicer (1), zur Durchführung des Verfahrens nach einem der vorhergehenden Ansprüche 1 - 9, mit
- einer Schneideinheit (7),
- einer Zufuhreinheit (20) zum Zuführen mehrerer Produkt-Kaliber (K) nebeneinander zu der Schneideinheit (7) zum gleichzeitigen abtrennen von Scheiben (S) von den Produkt-Kalibern (K),
- mehreren nebeneinander angeordneten Abförder-Einheiten (17) mit jeweils mehreren in Förderrichtung hintereinander angeordneten Abförderern (17a, b, c) zum Abfördern der von der Aufschneide-Maschine (1) abgetrennten Scheiben (S), insbesondere in Form von Portionen (P) aus mehreren Scheiben (S),
- einer Steuerung (1*) zur Steuerung beweglicher Teile der Aufschneide-Maschine (1),
**dadurch gekennzeichnet, dass**
- wenigstens zwei in der Aufsicht betrachtet nebeneinanderliegende Abförderer der Abförder-Einheiten (17) die Förder-Einheiten (27a, b) der Überlappungs-Einheit (30) sind.
